# EUROPÄISCHE PATENTSCHRIFT

(11) **EP 2 848 907 B1**
(45) Veröffentlichungstag und Bekanntmachung des Hinweises auf die Patenterteilung: **18.11.2015**
(21) Anmeldenummer: 13184690.9
(22) Anmeldetag: 17.09.2013
(51) Int. Cl.: G01L 7/04

(54) **Rohrfeder-Manometer mit Stoßdämpfung**
Bourdon tube pressure gauge with shock absorption
Manomètre à ressort tubulaire avec amortissement de choc

(43) Veröffentlichungstag der Anmeldung: 18.03.2015
(73) Patentinhaber: AFRISO-Euro-Index GmbH, 74363 Güglingen (DE)
(72) Erfinder: Karras, Andreas, 63936 Schneeberg (DE); Kreis, Tobias, 74722 Buchen - Waldhausen (DE); Müller, Hans Dr., 89129 Langenau (DE)
(74) Vertreter: Kohler Schmid Möbus Patentanwälte

(56) Entgegenhaltungen:
- DE-T2- 69 623 317
- US-A- 1 731 520
- US-A- 3 147 623
- US-A- 3 387 495
- US-A- 4 143 545

## Beschreibung

Die vorliegende Erfindung betrifft ein Manometer mit einer innen mit dem zu messenden Druck beaufschlagbaren, gekrümmten Rohrfeder und mit einem mit der Rohrfeder gekoppelten Messwerk und mit mindestens einem gehäuseseitig abgestützten Dämpfungselement, das bezüglich der Rohrfeder radial außen zwischen der Rohrfeder und dem rohrförmigen Manometergehäuse angeordnet ist und einer plastischen Verformung der Rohrfeder entgegenwirkt.

Ein derartiges Rohrfeder-Manometer ist beispielsweise durch die US 4,143,545 A bekannt geworden.

Bei Manometern, die als empfindliches und sehr präzises Messinstrument in rauer Umgebung eingesetzt werden, kommt es durch Stürze (Fall aus Hüft- oder Werkbankhöhe) oft zu bleibenden Beschädigungen des Zeigermesswerks. Durch die Beschleunigung aufgrund des freien Falls und den abrupten Aufschlag des Manometers auf hartem Boden kann das Zeigermesswerk dauerhaft beschädigt werden. Dabei kommt es in der Regel zu einer bleibenden Deformierung der C-förmigen Rohrfeder und/oder eines Justagebügels, über den der Federausschlag auf das Zeigermesswerk übertragen wird. Besonders hoch ist das Beschädigungsrisiko bei Manometern, die im täglichen Gebrauch einer hohen Beanspruchung unterliegen, wie dies zum Beispiel beim permanenten Gebrauch eines Reifenfüllers nach der Reifenmontage der Fall ist.

Um die Auswirkungen eines Sturzes in Grenzen zu halten, werden üblicherweise am Manometergehäuse Schutzringe angebracht, durch welche vor allem eine äußere Beschädigung des Gehäuses verhindert wird. Die Schutzringe können jedoch plastische Verformungen der Rohrfeder mit entsprechender Veränderung des Anzeigebereichs (Nullpunktabweichung) und der Genauigkeit nicht verhindern.

Das aus der US 4,143,545 A bekannte Rohrfeder-Manometer weist ein Dämpfungsteil in Form einer einseitig eingespannten Hülse aus Nylon auf, die aufgrund ihrer einseitigen Einspannung möglichst biegesteif sein sollte, um die Auslenkung der Rohrfeder zu dämpfen.

Weiterhin offenbaren DE 696 23 317 T2 ein Rohrfeder-Manometer mit einem Dämpfungselement in Form eines starren Gehäuseanschlags, US 3,387,495 A ein Rohrfeder-Manometer mit einem Dämpfungselement in Form einer gehäuseseitig befestigten Anschlagshülse und US 3,147,623 A ein gehäuseseitiges Dämpfungselement mit drei Anschlagfingern.

Schließlich ist aus der US 1 731 520 A noch ein Rohrfeder-Manometer mit einem Dämpfungselement in Form einer Blattfeder bekannt, die einerseits an der Innenwandung des Gehäuses und anderseits an der Rohrfeder abgestützt ist.

Es ist daher Aufgabe der vorliegenden Erfindung, bei einem Rohrfeder-Manometer der eingangs genannten Art Beschädigungen der Rohrfeder, insbesondere bei einem Sturz des Manometers aus Hüft- oder Werkbankhöhe, möglichst zu verhindern.

Diese Aufgabe wird erfindungsgemäß gelöst, dass das Dämpfungselement als geschlossener Dämpfungsring aus Kunststoffschaum oder Moosgummi oder als Dämpfungsringsegment aus Kunststoffschaum oder Moosgummi ausgebildet ist, der bzw. das ringsum an der Innenwandung des rohrförmigen Manometergehäuses anliegt.

Erfindungsgemäß befindet sich zwischen dem Manometergehäuse und der Rohrfeder ein Dämpfungselement (oder auch mehrere Dämpfungselemente), das im Manometergehäuse den Freiraum außerhalb des Arbeitsbereichs der Rohrfeder (d.h. außerhalb des elastischen Auslenkungsbereichs der Rohrfeder im zulässigen Druckarbeitsbereich) bis hin zur inneren Gehäusewandung ausfüllt. Dies bewirkt bei einem Sturz, dass durch die Gehäuseverformung (komplette Masse des Manometers wirkt auf das Manometergehäuse, so dass dieses im elastischen oder bereits plastischen Bereich verformt) das Dämpfungselement mit seinem sehr niedrigem Massenanteil einer Auslenkung der Rohrfeder über den elastischen Bereich hinaus, also einer plastischen Verformung (Überdehnung), entgegenwirkt. Durch die Gehäuseverformung wird das Dämpfungselement beim Aufprall gegen die Rohrfeder gedrückt, so dass der Freiraum zwischen Rohrfeder und Dämpfungselement nur noch minimal ist. Das Dämpfungselement ist erfindungsgemäß aus Kunststoffschaum oder Moosgummi. Durch die geringfügige Eigenmasse in Verbindung mit hoher Formstabilität wird dieser Werkstoff bei einem Sturz aufgrund seiner eigenen kinetischen Energie so gut wie nicht deformiert, so dass er die frei werdende Energie der Rohrfeder aufnehmen kann, bevor sich diese plastisch verformt.

Vorteilhafterweise ist das Dämpfungselement auf dem gesamten zulässigen Druckarbeitsbereich des Manometers von der Rohrfeder beabstandet, und zwar in einem Abstand, der größer als die auf dem gesamten zulässigen Druckarbeitsbereich des Manometers auftretende Auslenkung der Rohrfeder und kleiner als eine zur plastischen Deformation der Rohrfeder erforderliche Auslenkung der Rohrfeder ist.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: das erfindungsgemäße Rohrfeder-Manometer in einer perspektivischen Ansicht;
- Fign. 2a, 2b: eine Vorderansicht des erfindungsgemäßen Rohrfeder-Manometers mit einem Dämpfungsring (Fig. 2a) und ohne den Dämpfungsring (Fig. 2b), jeweils mit ausgeblendetem Ziffernblatt und Deckglas; und
- Fign. 3a, 3b: eine perspektivische Rückansicht des erfindungsgemäßen Rohrfeder-Manometers mit dem Dämpfungsring (Fig. 3a) und ohne den Dämpfungsring (Fig. 3b), jeweils mit ausgeblendetem Gehäuse.

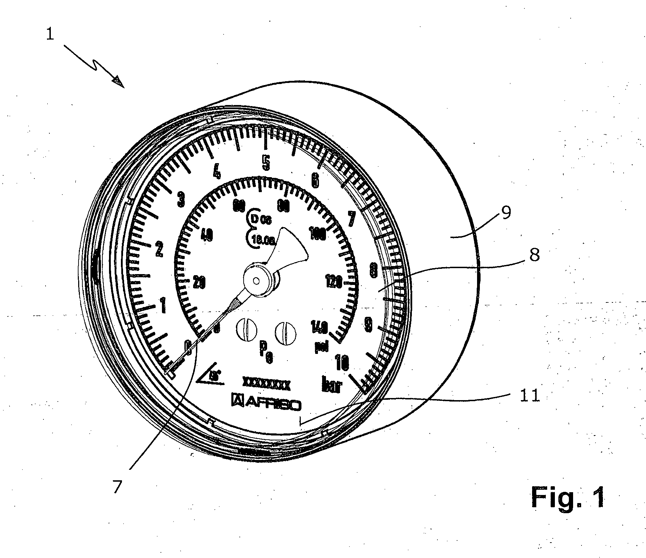

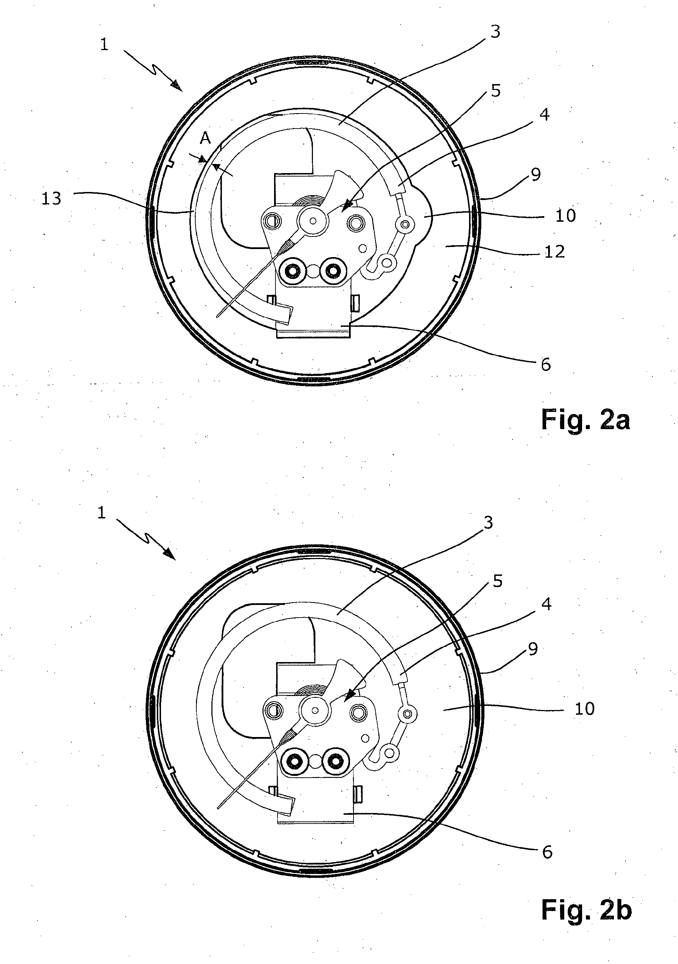

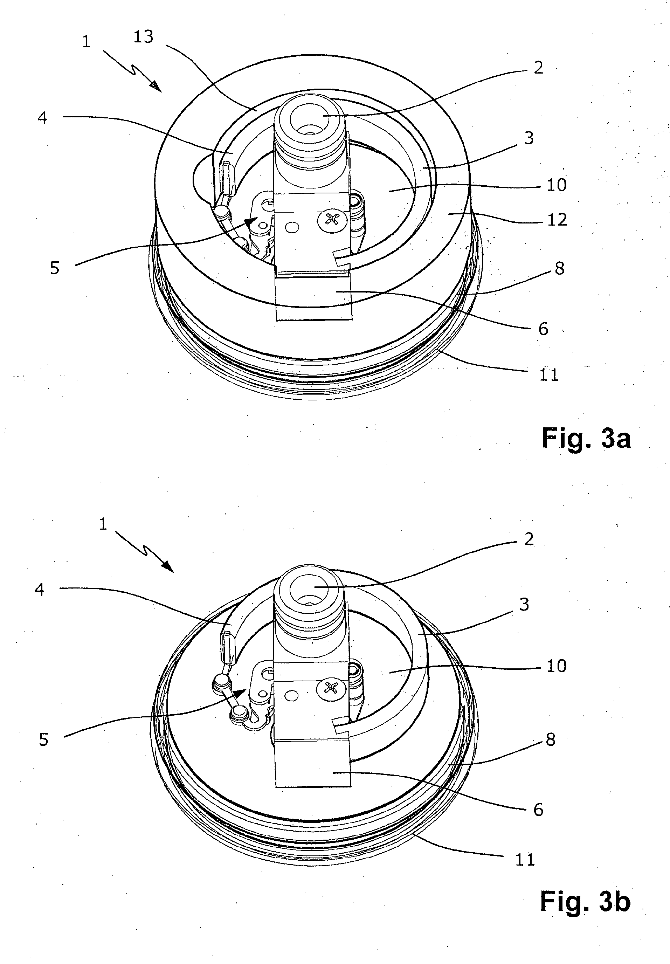

Das in **Fign. 1 bis 3** gezeigte Manometer **1** umfasst einen Messanschluss **2,** eine innen mit dem zu messenden Druck beaufschlagte, C-förmig gekrümmte Rohrfeder **3** aus metallischem Werkstoff, ein mit dem freien Ende **4** der Rohrfeder 3 gekoppeltes Zeigermesswerk **5** und einen am Zeigermesswerk 5 vorgesehenen Federträger **6** aus metallischem Werkstoff, an dem die Rohrfeder 3 befestigt, z.B. angelötet ist. Das Innere der Rohrfeder 3 steht über den Federträger 6 in Fluidverbindung mit dem Messanschluss 2.

Abhängig von dem in der Rohrfeder 3 herrschenden Druck wird das freie Ende 4 der Rohrfeder 3 mehr oder weniger weit nach außen ausgelenkt. Diese Auslenkung wird zum Zeigermesswerk 5 übertragen und von diesem in eine Drehstellung eines Zeigers **7** umgewandelt, der auf einem Zifferblatt **8** einen zugeordneten Druckwert anzeigt.

Das Manometer 1 weist ein rohrförmiges Manometergehäuse **9** auf, das an seiner einen Stirnseite mit einer Bodenplatte **10** versehen ist, an welcher wiederum der Federträger 6 und an diesem dann das Zeigermesswerk 5 befestigt ist, und an seiner anderen Stirnseite mit einem Zifferblatt 8 versehen und einem Deckglas **11** verschlossen ist.

Die Rohrfeder 3 ist radial außen von einem Dämpfungselement **12** umgeben, das einer plastischen Verformung der Rohrfeder 3, z.B. aufgrund eines Sturzes des Manometers 1, entgegenwirken soll. Das Dämpfungselement 12 ist hier als ein geschlossener Dämpfungsring aus elastischem Dämpfungsmaterial, wie z.B. Kunststoffschaum oder Moosgummi, ausgebildet, der zwischen der Rohrfeder 3 und dem Manometergehäuse 9 angeordnet ist und ringsum an der inneren Wandung des Manometergehäuses 9 anliegt, also gehäuseseitig abgestützt ist. Die Rohrfeder 2 ist somit außen von dem Dämpfungselement 12 vollständig umgeben.

Im nicht-druckbeaufschlagten Zustand des Manometers 1 ist zwischen der Rohrfeder 3 und dem Dämpfungselement 12 ein Ringspalt **13** vorhanden, dessen Spaltbreite **A** größer als die auf dem gesamten zulässigen Druckarbeitsbereich des Manometers 1 auftretende Auslenkung der Rohrfeder 3, aber kleiner als eine zur plastischen Deformation der Rohrfeder 3 erforderliche Auslenkung der Rohrfeder 3 ist. Mit anderen Worten ist das Dämpfungselement 12 auf dem gesamten zulässigen Druckarbeitsbereich des Manometers 1 von der Rohrfeder 2 beabstandet. Das Dämpfungselement 12 füllt also im Manometergehäuse 9 den Freiraum außerhalb des Arbeitsbereichs der Rohrfeder 13 bis hin zur inneren Wandung des Manometergehäuses 9 aus.

Bei einem Sturz wirkt die komplette Masse des Manometers 1 auf das Manometergehäuse 9, so dass sich dieses im elastischen oder bereits plastischen Bereich verformt. Durch diese Gehäuseverformung wird beim Aufprall das Dämpfungselement 12 nach innen gedrückt, so dass der Ringspalt 13 zwischen Rohrfeder 3 und Dämpfungselement 12 nur noch minimal ist und das Dämpfungselement 12 einer Auslenkung der Rohrfeder über den elastischen Bereich hinaus, also einer plastischen Verformung (Überdehnung), entgegenwirkt.

Statt des gezeigten geschlossenen Dämpfungsrings kann das Dämpfungselement auch als Dämpfungsringsegment oder durch mehrere Dämpfungselemente gebildet sein, die längs der Rohrfeder 3 angeordnet sind. Anstelle des gezeigten Zeigermesswerks kann auch ein anderes Anzeigemesswerk vorgesehen sein.

## Patentansprüche

1. Manometer (1) mit einer innen mit dem zu messenden Druck beaufschlagbaren, gekrümmten Rohrfeder (3), mit einem mit der Rohrfeder (3) gekoppelten Messwerk (5) und mit mindestens einem gehäuseseitig abgestützten Dämpfungselement (12), das bezüglich der Rohrfeder (3) radial außen zwischen der Rohrfeder (3) und dem rohrförmigen Manometergehäuse (9) angeordnet ist und einer plastischen Verformung der Rohrfeder (3) entgegenwirkt,
**dadurch gekennzeichnet,**
**dass** das Dämpfungselement (12) als geschlossener Dämpfungsring aus Kunststoffschaum oder Moosgummi oder als Dämpfungsringsegment aus Kunststoffschaum oder Moosgummi ausgebildet ist, der bzw. das ringsum an der Innenwandung des rohrförmigen Manometergehäuses (9) anliegt.

2. Rohrfeder-Manometer nach Anspruch 1, **dadurch gekennzeichnet, dass** das Dämpfungselement (12) auf dem gesamten zulässigen Druckarbeitsbereich des Manometers (1) von der Rohrfeder (3) beabstandet ist.

3. Rohrfeder-Manometer nach Anspruch 1 oder 2, **dadurch gekennzeichnet, dass** im nicht-druckbeaufschlagten Zustand des Manometers (1) das Dämpfungselement (12) von der Rohrfeder (3) in einem Abstand (A) angeordnet ist, der größer als die auf dem gesamten zulässigen Druckarbeitsbereich des Manometers (1) auftretende Auslenkung der Rohrfeder (3) und kleiner als eine zur plastischen Deformation der Rohrfeder (3) erforderliche Auslenkung der Rohrfeder (3) ist.

4. Rohrfeder-Manometer nach einem der vorhergehenden Ansprüche, **dadurch gekennzeichnet, dass** die Rohrfeder (3) außen von dem Dämpfungselement (12) vollständig umgeben ist.

## Claims

1. Pressure gauge (1) comprising
a curved Bourdon tube (3) which can be loaded inside with the pressure to be measured,
a measurement mechanism (5) which is coupled with the Bourdon tube (3), and at least one damping element (12) which is supported on the housing side and is arranged with respect to the Bourdon tube (3) radially outside between the Bourdon tube (3) and the tubular pressure gauge housing (9) and counteracts plastic deformation of the Bourdon tube (3),
**characterized in that**
the damping element (12) is formed as a closed damping ring of plastic foam or microcellular rubber or as a damping ring segment of plastic foam or microcellular rubber which abuts all-round the inner wall of the tubular pressure gauge housing (9).

2. Bourdon tube pressure gauge according to claim 1, **characterized in that** the damping element (12) is spaced apart from the Bourdon tube (3) in the overall admissible pressure working area of the pressure gauge (1).

3. Bourdon tube pressure gauge according to claim 1 or 2, **characterized in that** in the non-pressurized state of the pressure gauge (1), the damping element (12) is spaced apart from the Bourdon tube (3) at a distance (A) which is larger than the deflection of the Bourdon tube (3) that occurs in the overall admissible pressure working area of the pressure gauge (1) and is smaller than a deflection of the Bourdon tube (3) required for plastic deformation of the Bourdon tube (3).

4. Bourdon tube pressure gauge according to any one of the preceding claims, **characterized in that** the outside of the Bourdon tube (3) is completely surrounded by the damping element (12).

## Revendications

1. Manomètre (1) comportant un ressort tubulaire courbe (3) pouvant être soumis intérieurement à la pression à mesurer, un équipage mobile (5) couplé au ressort tubulaire (3) et au moins un élément d'amortissement (12) appuyé côté boîtier, qui est disposé radialement extérieurement par rapport au ressort tubulaire (3), entre le ressort tubulaire (3) et le boîtier tubulaire de manomètre (9), et qui s'oppose à une déformation plastique du ressort tubulaire (3),
**caractérisé en ce**
**que** l'élément d'amortissement (12) est réalisé sous la forme d'un anneau d'amortissement fermé en mousse de matière plastique ou en caoutchouc mousse ou sous la forme d'un segment d'anneau d'amortissement en mousse de matière plastique ou en caoutchouc mousse qui est appliqué tout autour contre la paroi intérieure du boîtier tubulaire de manomètre (9).

2. Manomètre à ressort tubulaire selon la revendication 1, **caractérisé en ce que** l'élément d'amortissement (12) est espacé du ressort tubulaire (3) sur toute la plage de fonctionnement sous pression admissible du manomètre (1).

3. Manomètre à ressort tubulaire selon l'une des revendications 1 ou 2, **caractérisé en ce que** dans l'état du manomètre (1) non soumis à une pression, l'élément d'amortissement (12) est disposé à une distance (A) du ressort tubulaire (3) qui est plus grande que la déviation du ressort tubulaire (3) se produisant sur toute la plage de fonctionnement sous pression admissible du manomètre (1) et plus petite qu'une déviation du ressort tubulaire (3) nécessaire pour une déformation plastique du ressort tubulaire (3).

4. Manomètre à ressort tubulaire selon l'une des revendications précédentes, **caractérisé en ce que** le ressort tubulaire (3) est complètement entouré extérieurement par l'élément d'amortissement (12).
